# EUROPÄISCHE PATENTSCHRIFT

(11) **EP 3 811 567 B1**
(45) Veröffentlichungstag und Bekanntmachung des Hinweises auf die Patenterteilung: **18.02.2026**
(21) Anmeldenummer: 19723726.6
(22) Anmeldetag: 03.05.2019
(51) Int. Cl.: H04L 1/1607, H04L 5/00, H04W 72/30, H04L 12/18, H04L 1/00

(54) **ERSTES ENDGERÄT, VERFAHREN ZUM BETREIBEN DES ERSTEN ENDGERÄTS, ZWEITES ENDGERÄT UND VERFAHREN ZUM BETREIBEN DES ZWEITEN ENDGERÄTS**
FIRST TERMINAL, METHOD FOR OPERATING THE FIRST TERMINAL, SECOND TERMINAL, AND METHOD FOR OPERATING THE SECOND TERMINAL
PREMIER TERMINAL, PROCÉDÉ D'UTILISATION DU PREMIER TERMINAL, SECOND TERMINAL ET PROCÉDÉ D'UTILISATION DU SECOND TERMINAL

(30) Priorität: 25.06.2018 DE 102018210279
(43) Veröffentlichungstag der Anmeldung: 28.04.2021
(73) Patentinhaber: Robert Bosch GmbH, 70442 Stuttgart (DE)
(72) Erfinder: SAMBALE, Klaus, 46047 Oberhausen (DE)
(86) Internationale Anmeldenummer: PCT/EP2019/061338
(87) Internationale Veröffentlichungsnummer: WO 2020/001833

(56) Entgegenhaltungen:
- EP-A1- 1 879 403
- EP-A1- 1 879 403
- EP-A1- 2 146 515
- EP-A1- 2 146 515
- US-A1- 2008 070 581
- US-B2- 8 238 310

## Beschreibung

### Stand der Technik

Die Erfindung betrifft ein erstes Endgerät, ein Verfahren zum Betreiben des ersten Endgeräts, ein zweites Endgerät und ein Verfahren zum Betreiben des zweiten Endgeräts.

Aus der EP 2 146 515 A1 und der EP 1 879 403 A1 sind Kommunikationssysteme umfassend eine Basisstation und mehrere Endgeräte bekannt, wobei die Basisstation mittels Multimedia Broadcast Multicast Service (MBMS) Daten gleichzeitig an die Endgeräte übertragen kann.

### Offenbarung der Erfindung

Das der Erfindung zugrunde liegende Problem wird durch ein erstes Endgerät nach dem Anspruch 1, durch ein Verfahren zum Betreiben des ersten Endgeräts nach einem nebengeordneten Anspruch, durch ein zweites Endgerät nach einem nebengeordneten Anspruch und durch ein Verfahren zum Betreiben des zweiten Endgeräts nach einem nebengeordneten Anspruch gelöst.

Gemäß einem ersten Aspekt dieser Beschreibung wird ein erstes Endgerät eines Funkkommunikationsnetzes bereitgestellt, wobei das erste Endgerät mindestens einen Prozessor, mindestens einen Speicher mit Computerprogrammcode und mindestens ein Kommunikationsmodul und mindestens eine Antenne umfasst, wobei der Computerprogrammcode so konfiguriert ist, dass er mit dem mindestens einen Prozessor, dem mindestens einen Kommunikationsmodul und der Antenne bewirkt, dass das erste Endgerät erste Nachrichten auf einer ersten Funkressource über einen Sidelink-Kanal an eine Gruppe von weiteren Endgeräten sendet, wenigstens eine Antwort nach dem Versand der jeweiligen ersten Nachricht von wenigstens einem der weiteren Endgeräte der Gruppe über den Sidelink-Kanal empfängt, eine Ressourcenänderungsentscheidung in Abhängigkeit von der wenigstens einen Antwort ermittelt, und zweite Nachrichten in Abhängigkeit von der Ressourcenänderungsentscheidung auf einer zweiten Funkressource über den Sidelink-Kanal an die Gruppe von weiteren Endgeräten sendet, wobei die zweite Funkressource sich von der ersten Funkressource unterscheidet.

Für das erste Endgerät ist es möglich, anhand der empfangenen Antworten zu entscheiden, ob die für eine Broadcast-Nachricht bzw. Multicast-Nachricht genutzte Funkressource, welche semi-persistent oder persistent vergeben wurde, beibehalten oder gewechselt wird. Durch die Herbeiführung der Ressourcenänderungsentscheidung wechselt das erste Endgerät zu der zweiten Funkressource, womit vor allem konsekutive Kollisionen vermieden werden und möglichst schnell eine hohe Empfangsquote der versendeten Nachrichten sichergestellt wird. Damit wird auf auftretende Kollisionen schnell reagiert und gleichzeitig eine verteilte Kollisionsvermeidungsstrategie geschaffen, welche ohne eine zentrale Scheduling-Einheit wie beispielsweise eine Basisstation auskommt.

Von der bereitgestellten dezentralen Kollisionsvermeidungsstrategie profitieren Anwendungen, bei denen der Verlust einzelner Nachrichten zwar hinnehmbar ist, jedoch der Verlust mehrerer aufeinanderfolgender Nachrichten problematisch ist. Ein Beispiel für solche Anwendungen ist das sogenannte Platooning, bei dem beispielsweise kolonnen-fahrende Lastkraftwagen miteinander kommunizieren und Beschleunigungs- und Bremsvorgänge untereinander koordinieren.

Eine vorteilhafte Ausführungsform zeichnet sich dadurch aus, dass das erste Endgerät eine erste Anzahl von Antworten nach dem Versand der jeweiligen Nachricht über den Sidelink-Kanal empfängt, eine zweite Anzahl von Endgeräten der Gruppe ermittelt, die erste Anzahl von Antworten mit der zweiten Anzahl von Endgeräten in der Gruppe vergleicht, und die Ressourcenänderungsentscheidung in Abhängigkeit von dem Vergleich ermittelt. Beim Wegfallen von Antworten, d. h. einer Reduktion der ersten Anzahl, im Sinne von Empfangsbestätigungen im Vergleich zu der zweiten Anzahl der gruppenzugehörigen Endgeräte nimmt das erste Endgerät beispielsweise eine erhöhte Kollisionsrate an und ändert die verwendete Funkressource, um diese Situation zu entschärfen. Vorteilhaft wird die Anzahl von Endgeräten der Gruppe ausgenutzt, um die Kollisionsreaktion des ersten Endgeräts im Sinne der Ressourcenänderungsentscheidung zu verbessern und damit die spektrale Effizienz zu verbessern.

Eine vorteilhafte Ausführungsform zeichnet sich dadurch aus, dass das erste Endgerät eine erste Anzahl von Antworten nach dem Versand der jeweiligen Nachricht über den Sidelink-Kanal empfängt, eine zweite Anzahl von Endgeräten der Gruppe ermittelt, eine dritte Anzahl durch Multiplikation der ersten Anzahl mit einem Skalierungsfaktor ermittelt, die dritte Anzahl mit der zweiten Anzahl von Endgeräten der Gruppe vergleicht, und die Ressourcenänderungsentscheidung in Abhängigkeit von dem Vergleich ermittelt. Vorteilhaft versendet nur eine Untermenge der Endgeräte der Gruppe eine Antwort. Diese Anzahl wird durch den Skalierungsfaktor bestimmt. Das erste Endgerät errechnet dann aus der Anzahl der empfangenen Antworten und dem Skalierungsfaktor diejenige Anzahl der Endgeräte, welche einen Empfang / Nicht-Empfang bestätigen würden. Durch den Skalierungsfaktor sinkt die Anzahl der versendeten Antworten, womit die spektrale Effizienz bei der bereitgestellten Kollisionsvermeidungsstrategie steigt.

Eine vorteilhafte Ausführungsform zeichnet sich dadurch aus, dass die Antwort eine negative Empfangsbestätigung ist. Der Vorteil der negativen Empfangsbestätigung ist der, dass - wenn davon ausgegangen wird, dass eine große Anzahl der beteiligten Endgeräte die versendeten Nachrichten korrekt empfängt - eine geringere Anzahl von Endgeräten eine Antwort auf die Nachricht versendet. Der kleinere Teil der Endgeräte, die den Nicht-Empfang mit der negativen Empfangsbestätigung quittieren, erzeugt dann ein geringeres Datenaufkommen auf dem Funkkanal, was die spektrale Effizienz erhöht.

Eine vorteilhafte Ausführungsform zeichnet sich dadurch aus, dass die Antwort einen Ressourcenindikator, welcher die betreffende Funkressource eindeutig identifiziert, umfasst. So kann der Ressourcenindikator beispielsweise einen Zeitstempel oder eine Identifikationskennung der ersten Funkressource umfassen. Der Ressourcenindikator ermöglicht dem ersten Endgerät somit eine eindeutige und einfache Zuordnung der empfangenen Antwort zu der Funkressource, womit die Ermittlung der Ressourcenänderungsentscheidung vereinfacht wird. Die Kollisionserkennung wird verbessert.

Eine vorteilhafte Ausführungsform zeichnet sich dadurch aus, dass das erste Endgerät positive Empfangsbestätigungen als Antwort auf die jeweilige versandte Nachricht über den Sidelink-Kanal empfängt, negative Empfangsbestätigungen als Antwort auf die jeweilige versandte Nachricht empfängt, einen Kollisionsindikator in Abhängigkeit von der Anzahl der positiven Empfangsbestätigungen und in Abhängigkeit von der Anzahl der negativen Empfangsbestätigungen ermittelt, und die Ressourcenänderungsentscheidung in Abhängigkeit von einem Vergleich des Kollisionsindikators mit einem Kollisionsschwellwert ermittelt. Vorteilhaft bietet der Kollisionsindikator eine zuverlässige Information über den Durchdringungsgrad der versendeten Nachricht in der Gruppe von weiteren Endgeräten. Die Erkennungsgenauigkeit von Kollisionen steigt, womit auch die Behebungsmaßnahmen im Sinne des Wechsels der Funkressource verbessert werden.

Eine vorteilhafte Ausführungsform zeichnet sich dadurch aus, dass das erste Endgerät wenigstens eine Bewegungs- und/oder Positionsinformation von Endgeräten mittels einer weiteren Nachricht empfängt, die Gruppe der weiteren Endgeräte in Abhängigkeit von den empfangenen Bewegungs- und/oder Positionsinformation ermittelt, die Ressourcenänderungsentscheidung in Abhängigkeit von Antworten der Endgeräte der ermittelten Gruppe ermittelt. Vorteilhaft werden durch die Berücksichtigung der Bewegungs- und/oder Positionsinformation nur diejenigen weiteren Endgeräte der Gruppe im Sinne einer Teilmenge der funktechnisch direkt erreichbaren Endgeräte beim Wechsel einer Funkressource berücksichtigt, welche auch einen tatsächlichen Nutzen davon haben. Vorteilhaft werden die anderen Endgeräte, welche potenziell nur kurzzeitig Kollisionen erfahren, bei der Ermittlung der Ressourcenänderungsentscheidung ausgeblendet.

Beispielsweise haben Fahrzeuge, welche auf einer Autobahn auf der entgegengesetzten Spur fahren, einen geringeren Vorteil von einer Änderung der Funkressource als Fahrzeuge, welche die gleiche Fahrtrichtung aufweisen. Folglich bietet die Bewegungsinformation im Sinne einer Fahrtrichtung Vorteile bei der Herbeiführung der Ressourcenänderungsentscheidung.

Ebenso können weit entfernte weitere Endgeräte ignoriert werden, womit die Relevanz der weiteren Endgeräte, welche sich näher bei dem ersten Endgerät befinden, bei der Ressourcenänderungsentscheidung erhöht wird. Darüber hinaus kann der Wiederholabstand der genutzten Funkressource für den Versand von Nachrichten verkürzt werden, da nunmehr nur noch Kollisionen für eine Untergruppe der weiteren Endgeräte überwacht und aufgelöst werden sollen.

Eine vorteilhafte Ausführungsform zeichnet sich dadurch aus, dass das erste Endgerät den Skalierungsfaktor in Abhängigkeit von der Anzahl der weiteren Endgeräte der Gruppe ermittelt. Vorteilhaft wird durch die Berücksichtigung der Anzahl der Endgeräte in der Gruppe erreicht, dass der Skalierungsfaktor die mit der Anzahl der Endgeräte skalierende Netzwerklast berücksichtigt. Folglich kann die Anzahl der Antworten mittels des Skalierungsfaktors umgekehrt proportional zur Netzwerklast eingestellt werden, womit auch bei erhöhter Belastung des Funkkanals die verteilte Kollisionsvorbeugestrategie erhalten bleibt. Damit ist es für das erste Endgerät möglich, anhand der empfangenen Antworten zu entscheiden, ob die genutzte Funkressource beibehalten oder gewechselt wird. Gleichzeitig kann die dezentrale Kollisionserkennung und -auflösung auch bei steigender Netzwerklast genutzt werden.

Eine vorteilhafte Ausführungsform zeichnet sich dadurch aus, dass das erste Endgerät eine erste Anzahl von Antworten nach dem Versand der jeweiligen auf der ersten Funkressource gesendeten Nachricht von Endgeräten der Gruppe über den Sidelink-Kanal empfängt, eine zweite Anzahl von Antworten nach dem Versand der jeweiligen auf der zweiten Funkressource gesendeten Nachricht von Endgeräten der Gruppe über den Sidelink-Kanal empfängt, eine weitere Ressourcenänderungsentscheidung ermittelt, wenn eine absolute Differenz der ersten und zweiten Anzahl von Antworten einen Schwellwert überschreitet, und weitere Nachrichten in Abhängigkeit von der Ressourcenänderungsentscheidung auf einer dritten Funkressource an die Gruppe von weiteren Endgeräten sendet, wobei sich die dritte Funkressource von der ersten und zweiten Funkressource unterscheidet. Damit wird eine Möglichkeit bereitgestellt, dass das erste Endgerät unmittelbar auf einen Wechsel der Funkressource und den Empfang von Antworten einen erneuten Wechsel der Funkressource triggert. So wird in dezentraler Weise schnellstmöglich eine möglichst wenige Kollisionen aufweisende Funkressource gefunden.

Eine vorteilhafte Ausführungsform zeichnet sich dadurch aus, dass die Nachrichten, insbesondere die ersten, zweiten und dritten Nachrichten sowie die weitere Nachricht, Cooperative Awareness Messages, CAM, insbesondere gemäß ETSI TS 102 637-2 V1.2.1 (2011-03), und/oder Decentralized Enviromental Notification Messages, DENM, insbesondere gemäß ETSI TS 102 637-3 V1.1.1 (2010-09) sind.

Ein zweiter Aspekt dieser Beschreibung stellt ein Verfahren zum Betreiben eines ersten Endgeräts eines Funkkommunikationsnetzwerks bereit, wobei das Verfahren umfasst: Versenden von ersten Nachrichten auf einer ersten Funkressource über einen Sidelink-Kanal an eine Gruppe von weiteren Endgeräten, Empfangen über den Sidelink-Kanal wenigstens einer Antwort nach dem Versand der jeweiligen ersten Nachricht von wenigstens einem der weiteren Endgeräte der Gruppe, Ermitteln einer Ressourcenänderungsentscheidung in Abhängigkeit von der wenigstens einen Antwort, und Versenden zweiter Nachrichten in Abhängigkeit von der Ressourcenänderungsentscheidung auf einer zweiten Funkressource über den Sidelink-Kanal an die Gruppe von weiteren Endgeräten, wobei die zweite Funkressource sich von der ersten Funkressource unterscheidet.

Ein dritter Aspekt dieser Beschreibung betrifft ein zweites Endgerät eines Funkkommunikationsnetzwerks, wobei das zweite Endgerät mindestens einen Prozessor, mindestens einen Speicher mit Computerprogrammcode und mindestens ein Kommunikationsmodul und mindestens eine Antenne umfasst, wobei der Computerprogrammcode so konfiguriert ist, dass er mit dem mindestens einen Prozessor, dem mindestens einen Kommunikationsmodul und der Antenne bewirkt, dass der das zweite Endgerät erste Nachrichten von einem ersten Endgerät auf einer ersten Funkressource über den Sidelink-Kanal empfängt, eine Antwort in Abhängigkeit von einer erfolgreichen oder nicht erfolgreichen Decodierung der jeweiligen ersten Nachricht ermittelt, die Antwort an das erste Endgerät über den Sidelink-Kanal versendet, und zweite Nachrichten von dem ersten Endgerät auf einer zweiten Funkressource über den Sidelink-Kanal empfängt, wobei die zweite Funkressource sich von der ersten Funkressource unterscheidet.

Eine vorteilhafte Ausführungsform zeichnet sich dadurch aus, dass das zweite Endgerät eine Zufallszahl zwischen zwei Werten ermittelt, und die Zufallszahl mit einem Schwellwert vergleicht, die Antwort in Abhängigkeit von dem Vergleich an das erste Endgerät versendet.

Eine vorteilhafte Ausführungsform zeichnet sich dadurch aus, dass das zweite Endgerät die Antwort nur dann an das erste Endgerät über den Sidelink-Kanal versendet, wenn die ermittelte Zufallszahl kleiner oder gleich dem Schwellwert ist, wobei der Schwellwert ein Kehrwert eines Skalierungsfaktors ist.

Eine vorteilhafte Ausführungsform zeichnet sich dadurch aus, dass das zweite Endgerät wenigstens eine Bewegungs- und/oder Positionsinformation von weiteren Endgeräten mittels einer weiteren Nachricht über den Sidelink-Kanal empfängt, den Skalierungsfaktor in Abhängigkeit von der Anzahl der weiteren Endgeräte ermittelt. Vorteilhaft wird durch die Berücksichtigung der Anzahl der Endgeräte erreicht, dass der Skalierungsfaktor die mit der Anzahl der Endgeräte skalierende Netzwerklast berücksichtigt. Folglich kann die Anzahl der Antworten mittels des Skalierungsfaktors umgekehrt proportional zur Netzwerklast eingestellt werden, womit auch bei erhöhter Belastung des Funkkanals die verteilte Kollisionserkennungs- und -vorbeugestrategie erhalten bleibt. Damit ist es für das erste Endgerät möglich, anhand der empfangenen Antworten zu entscheiden, ob die genutzte Funkressource beibehalten oder gewechselt wird. Gleichzeitig kann die dezentrale Kollisionserkennung und -auflösung auch bei steigender Netzwerklast genutzt werden.

In einer vorteilhaften Ausführungsform wird eine Empfangsleistung während des Empfangs der ersten Nachricht ermittelt und die Antwort in Abhängigkeit von der Empfangsleistung und in Abhängigkeit von der erfolgreichen oder nicht erfolgreichen Decodierung der jeweiligen ersten Nachricht ermittelt. Vorteilhaft wird dadurch die Reichweite des Versands der ersten Nachricht bei der Ermittlung der Antwort berücksichtigt.

Eine vorteilhafte Ausführungsform zeichnet sich dadurch aus, dass die Antwort eine negative Empfangsbestätigung ist. Der Vorteil der negativen Empfangsbestätigung ist der, dass - wenn davon ausgegangen wird, dass eine große Anzahl der beteiligten Endgeräte die versendeten Nachrichten korrekt empfängt - eine geringere Anzahl von Endgeräten eine Antwort auf die Nachricht versendet. Der kleinere Teil der Endgeräte, die den Nicht-Empfang mit der negativen Empfangsbestätigung quittieren, erzeugt dann ein geringeres Datenaufkommen auf dem Funkkanal, was die spektrale Effizienz erhöht.

Eine vorteilhafte Ausführungsform zeichnet sich dadurch aus, dass die Antwort einen Ressourcenindikator, welcher die betreffende Funkressource eindeutig identifiziert, umfasst. So kann der Ressourcenindikator beispielsweise einen Zeitstempel oder eine Identifikationskennung der ersten Funkressource umfassen. Der Ressourcenindikator ermöglicht dem ersten Endgerät somit eine eindeutige und einfache Zuordnung der empfangenen Antworten, womit die Ermittlung der Ressourcenänderungsentscheidung vereinfacht wird. Rechenaufwand wird eingespart und gleichzeitig die Kollisionserkennung verbessert.

Eine vorteilhafte Ausführungsform zeichnet sich dadurch aus, dass die Nachrichten, insbesondere die ersten, zweiten Nachrichten sowie die weitere Nachricht, Cooperative Awareness Messages, CAM, insbesondere gemäß ETSI TS 102 637-2 V1.2.1 (2011-03), und/oder Decentralized Enviromental Notification Messages, DENM, insbesondere gemäß ETSI TS 102 637-3 V1.1.1 (2010-09) sind.

Ein vierter Aspekt dieser Beschreibung betrifft ein Verfahren zum Betreiben eines zweiten Endgeräts eines Funkkommunikationsnetzwerks, wobei das Verfahren umfasst: Empfangen erster Nachrichten von einem ersten Endgerät auf einer ersten Funkressource über einen Sidelink-Kanal, Ermitteln einer Antwort in Abhängigkeit von einer erfolgreichen oder nicht erfolgreichen Decodierung der jeweiligen ersten Nachricht, Versenden der Antwort an das erste Endgerät über den Sidelink-Kanal, und Empfangen zweiter Nachrichten von dem ersten Endgerät auf einer zweiten Funkressource über den Sidelink-Kanal, wobei die zweite Funkressource sich von der ersten Funkressource unterscheidet.

Weiter Merkmale und Vorteile sind der nachfolgenden Beschreibung von Ausführungsbeispielen und der Zeichnung zu entnehmen. In der Zeichnung zeigen:
- Figur 1: ein schematisch dargestelltes Funkkommunikationsnetzwerk;
- Figur 2: ein schematisch dargestelltes Endgerät;
- Figuren 3, 4, 8 und 11: jeweils ein schematisch dargestelltes Ablaufdiagramm; und
- Figuren 5, 6, 7, 9, 10 und 12: jeweils ein schematisch dargestelltes Sequenzdiagramm.

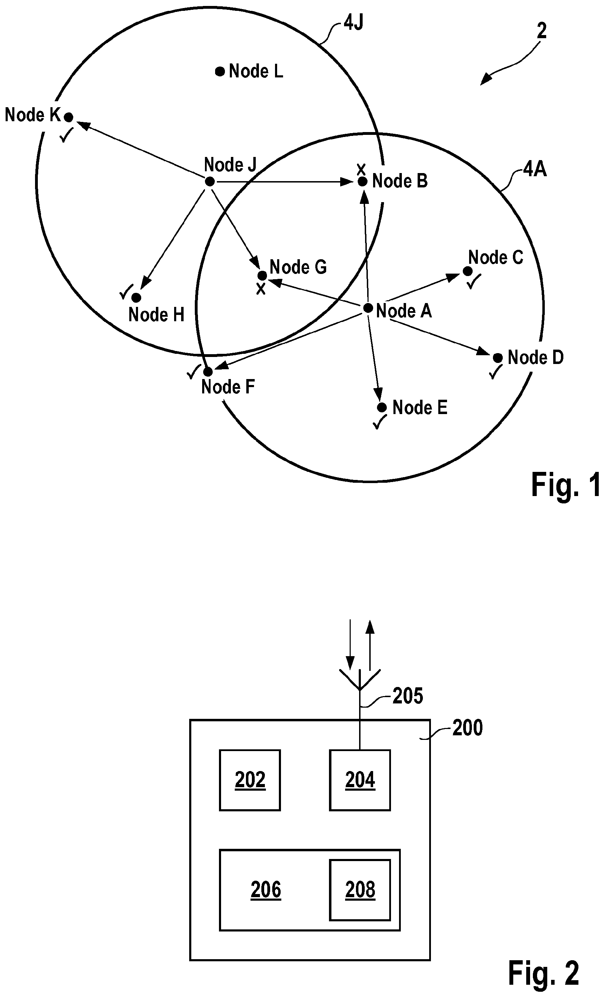

Figur 1 zeigt eine schematische Darstellung eines Funkkommunikationsnetzwerks 2. Endgeräte A bis L sind beispielsweise einem jeweiligen Fahrzeug oder einer straßenseitigen Infrastruktur angeordnet. Die Endgeräte A bis L sind beispielsweise gemäß dem IEEE-Standard "802.11p-2010 - IEEE Standard for Information Technology - Local and Metropolitan Area Networks-" Specific Part 11: Wireless LAN Medium Access Control (MAC) and Physical Layer (PHY) Specifications Amendment 6: Wireless Access in Vehicular Environments" konfiguriert. IEEE 802.11p ist ein Standard zur Erweiterung des WLAN-Standards IEEE 802.11. Das Ziel von IEEE 802.11p ist es, Funktechnologie in Personenkraftwagen zu etablieren und eine zuverlässige Schnittstelle für Intelligent Transport Systems (ITS)-Anwendungen bereitzustellen. IEEE 802.11p ist auch die Basis für Dedicated Short Range Communication (DSRC) im Bereich von 5,85 bis 5,925 GHz. In einem weiteren Beispiel sind die Endgeräte A bis L gemäß dem LTE-V2X Standard, insbesondere gemäß 3GPP TS 36.300 V14.2.0 (2017-03) konfiguriert, wobei die Endgeräte A bis L über einen Sidelink-Kanal direkt miteinander kommunizieren. In dem Funkkommunikationsnetzwerk 2 werden Daten zwischen den Endgeräten A bis L über eine Funkressource übertragen, welche nicht durch eine zentrale Einheit vorgegeben bzw. gescheduled werden. Im gezeigten Beispiel verwenden die Endgeräte A und J diese Funkressource, um Nachrichten an eine jeweilige Gruppe von Endgeräten zu versenden. Das Endgerät A versendet seine Nachricht an die Gruppe von Endgeräten B, C, D, E, F und G, welche innerhalb einer Funkdistanz 4A des Endgerät A liegen. Das Endgerät J versendet seine Nachricht an die Gruppe von Endgeräten B, G, H und K, welche innerhalb einer Funkdistanz 4J des Endgerät J liegen, wobei das Endgerät L ausgenommen ist. Folglich werden mit den versendeten Nachrichten entweder alle oder eine Teilmenge der direkt erreichbaren Endgeräte im Sinne eines Broadcast oder Multicast adressiert. Die Endgeräte B und G liegen jeweils innerhalb der beiden Funkdistanzen 4A und 4J und sind darüber hinaus auch Teil der jeweiligen von den Nachrichten adressierten Gruppen. Ein zeitgleicher Versand von Nachrichten führt zu einer Kollision bei den Endgeräten B und G.

Figur 2 zeigt schematisch ein Endgerät 200. Das Endgerät 200 umfasst einem Prozessor 202, ein Kommunikationsmodul 204, eine Antenne 205 und einen Speicher 206. Der Speicher 206 ist mit einem Computerprogrammcode 208 ausgestattet, der so konfiguriert ist, dass er mit dem mindestens einen Prozessor 202, dem mindestens einen Kommunikationsmodul 204 und der mindestens einen Antenne 205 die in dieser Spezifikation beschriebenen Schritte ausführt. Die Endgeräte A bis L aus Figur 1 sind beispielsweise gemäß dem Endgerät 200 ausgebildet.

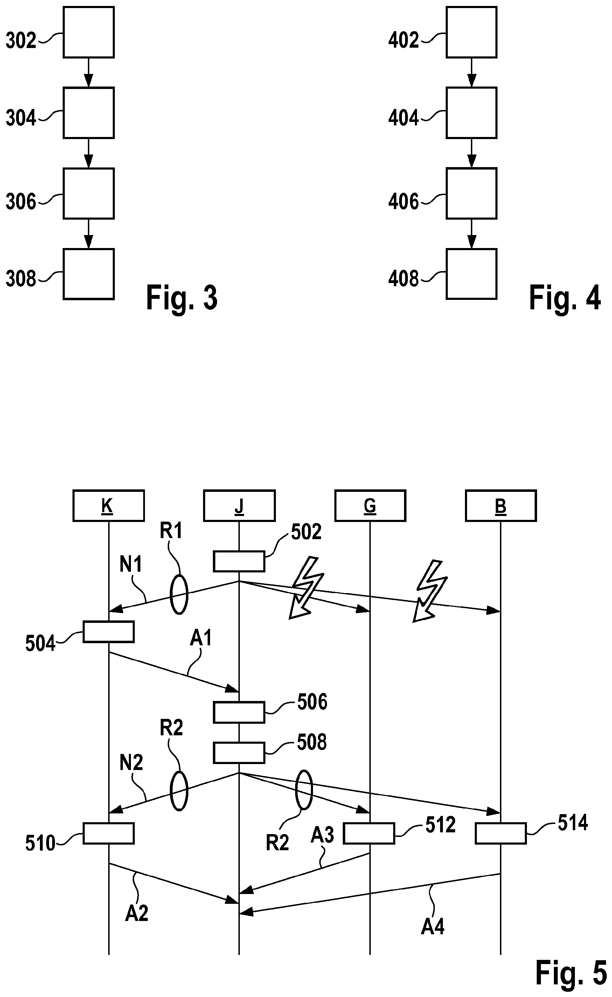

Figur 3 zeigt ein schematisches Ablaufdiagramm zum Betreiben eines ersten Endgeräts A, J aus Figur 1. Gemäß einem Schritt 302 sendet das erste Endgerät erste Nachrichten auf einer ersten Funkressource an eine Gruppe von weiteren Endgeräten. Gemäß einem Schritt 304 empfängt das erste Endgerät wenigstens eine Antwort nach dem Versand der jeweiligen ersten Nachricht von wenigstens einem der weiteren Endgeräte der Gruppe. Gemäß einem Schritt 306 ermittelt das erste Endgerät eine Ressourcenänderungsentscheidung in Abhängigkeit von der wenigstens einen Antwort. Gemäß einem Schritt 308 versendet das erste Endgerät zweite Nachrichten in Abhängigkeit von der Ressourcenänderungsentscheidung auf einer zweiten Funkressource an die Gruppe von weiteren Endgeräten.

Die erste und die zweite Funkressource werden beispielsweise selbstständig von dem jeweiligen Endgerät A, J gescheduled, womit ein verteiltes Scheduling gegeben ist und keine zentrale Einheit die Zuweisung der Funkressourcen bestimmt. Während einer ersten Zeitdauer wird die erste Funkressource verwendet. Während einer zweiten Zeitdauer wird die zweite Funkressource verwendet. Die Funkressourcen werden also dezentral und semi-persistent bzw. persistent gescheduled.

Eine jeweilige der verwendeten Funkressourcen ist durch eine periodisch wiederkehrende Verwendung wenigstens einer Zeit-Frequenz-Ressource, welche auch als Ressource Block bezeichenbar ist, gekennzeichnet. Unterschiedliche Funkressourcen unterscheiden sich beispielsweise durch eine unterschiedliche Periodizität und/oder durch einen Abstand der jeweiligen verwendeten Zeit-Frequenz-Ressource und/oder durch einen verwendeten Subchannel und/oder ein Modulation and Coding Scheme. MCS.

In einem Beispiel überwacht das erste Endgerät verfügbare Funkressourcen. Das erste Endgerät zählt Wechsel von Funkressourcen durch andere Endgeräte, wobei die Wechsel beispielsweise auf Basis eines der beschriebenen Verfahren von dem jeweiligen anderen Endgerät durchgeführt werden. Sobald die Anzahl der Wechsel pro Zeiteinheit einen Schwellwert überschreitet, so wird das erste Endgerät davon absehen, die Funkressource zu wechseln, obwohl es eine Ressourcenänderungsentscheidung ermittelt hat. Bei hoher Kanallast ergeben sich hierdurch Vorteile, da durch zu häufige Wechsel der Funkressourcen die Kollisionswahrscheinlichkeit steigt.

Figur 4 zeigt ein schematisches Ablaufdiagramm zum Betreiben eines zweiten Endgeräts C, D, E, B, G, F, H, K aus Figur 1. Gemäß einem Schritt 402 empfängt das zweite Endgerät erste Nachrichten von einem ersten Endgerät auf der ersten Funkressource. Gemäß einem Schritt 404 ermittelt das zweite Endgerät eine Antwort in Abhängigkeit von einer erfolgreichen oder nicht erfolgreichen Decodierung der jeweiligen ersten Nachricht. Gemäß einem Schritt 406 versendet das zweite Endgerät die Antwort an das erste Endgerät. Gemäß einem Schritt 408 empfängt das zweite Endgerät zweite Nachrichten von dem ersten Endgerät auf der zweiten Funkressource. Die erste und zweite Funkressource sind beispielsweise durch eine jeweils zugeordnete Zeit-Frequenz-Ressource gekennzeichnet, welche jeweils periodisch genutzt wird.

Die verwendeten ersten und zweiten Funkressourcen werden von den Endgeräten entweder untereinander ausgehandelt oder von einem einzelnen Endgerät selbst bestimmt. Eine weitere zentrale Einheit wie beispielsweise eine Basisstation ist nicht vorhanden, womit die Kommunikation zwischen den Endgeräten durch die Endgeräte selbst koordiniert wird.

Figur 5 zeigt ein schematisches Sequenzdiagramm. Das Endgerät J ermittelt im Schritt 502 eine erste Nachricht N1 und versendet diese über eine erste Funkressource R1 insbesondere an die Endgeräte K, G und B. Die Endgeräte G und B empfangen die erste Nachricht N1 nicht oder können diese nicht erfolgreich decodieren. Das Endgerät K hingegen empfängt die Nachricht N1 und ermittelt im Schritt 504 eine Antwort A1 im Sinne einer erfolgreichen Empfangsbestätigung, um diese an das Endgerät J zu übersenden. Nimmt man im Beispiel der Figur 5 an, dass die Endgeräte K, G und B zu der Gruppe der von der Nachricht N1 adressierten Endgeräte zählen, so wird die Anzahl von drei Endgeräten mit der ersten Anzahl von einer einzigen Antwort in einem Schritt 506 von dem Endgerät J miteinander verglichen. Die Anzahl kann auch null Antworten umfassen. Somit wird im Schritt 506 festgestellt, dass eine Anzahl von drei Endgeräten K, G, B die Nachricht N1 hätte erhalten sollen, jedoch nur eines der Endgeräte, nämlich das Endgerät K, die Nachricht tatsächlich empfangen hat. Somit kann im Schritt 506 das Endgerät J davon ausgehen, dass die Kollisionen beim Empfang der Nachricht N1 bei den Endgeräten G und B stattgefunden haben. Folglich wird die Ressourcenänderungsentscheidung in Abhängigkeit von dem im Schritt 506 durchgeführten Vergleich ermittelt. Die Ressourcenänderungsentscheidung führt in einem Schritt 508 dazu, dass für eine zweite Nachricht N2 eine zweite von der ersten Funkressource R1 unterschiedliche Funkressource R2 ausgewählt wird, um die zweite Nachricht N2 über die zweite Funkressource an die Endgeräte K, G, B zu versenden. In einem jeweiligen Schritt 510, 512, 514 wird eine jeweilige Antwort A2, A3, A4 ermittelt und anschließend an das Endgerät J übersendet. Die Anzahl der zu der Gruppe gehörigen Endgeräte wird von dem Endgerät J beispielsweise in Abhängigkeit von empfangenen Positionsnachrichten ermittelt und in einer entsprechenden Liste geführt. In Figur 5 werden beispielsweise nur positive Empfangsbestätigungen, ACKs, versendet.

Die jeweiligen Antworten A1, A2 usw. können entweder als separate Nachricht oder verpackt in einer anderen Nachricht übermittelt werden. Dies ist für die gesamte Beschreibung gültig. Die jeweiligen Antworten A1, A2 usw. umfassen wenigstens eine der folgenden Informationen: Positive Empfangsbestätigung oder negative Empfangsbestätigung; Absender der Nachricht, auf die die jeweilige Antwort A1, A2 hin ermittelt und versendet wird; einen Zeitstempel, welcher einen Empfangszeitpunkt der zugehörigen Nachricht identifiziert; einen Identifikation der für die Nachricht verwendeten Funk Ressourcen.

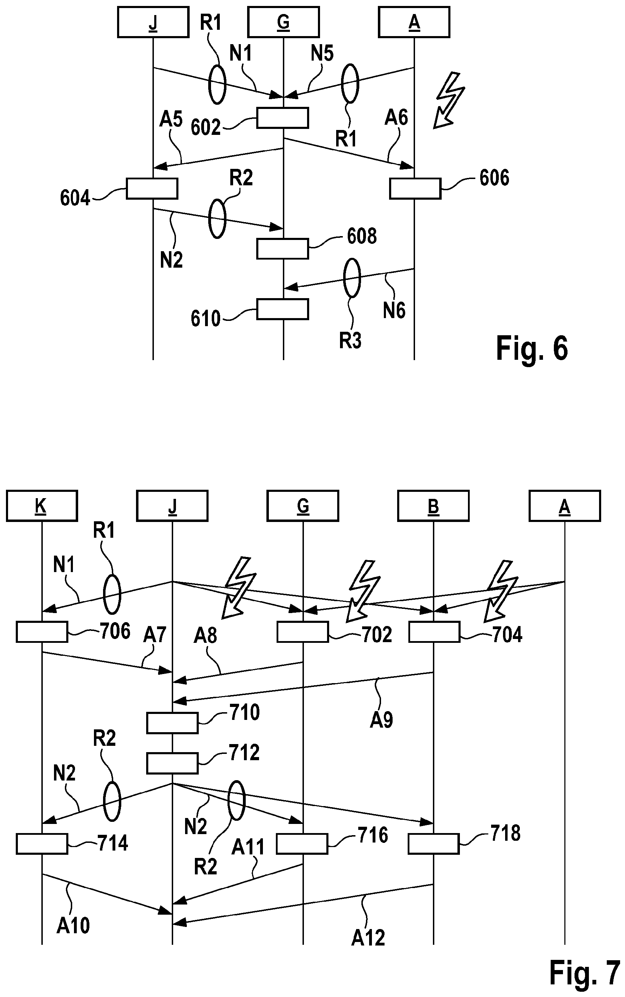

Figur 6 zeigt ein schematisches Sequenzdiagramm. Beide Endgeräte J und A versuchen zu einem gleichen Zeitpunkt eine jeweilige Nachricht N1, N5 auf derselben Ressource R1 an das Endgerät G zu übermitteln. Das Endgerät G ermittelt eine jeweilige negative Empfangsbestätigung A5, A6 in einem Schritt 602 und übersendet diese negative Empfangsbestätigung A5, A6 an das jeweilige Endgerät J, A. Selbstverständlich kann auch nur eine einzige negative Empfangsbestätigung versendet werden, welche die Endgeräte J, A bzw. die verwendete Funkressource indizieren.

Das jeweilige Endgerät J, A schätzt aus der jeweiligen Antwort A5, A6 in einem jeweiligen Schritt 604, 606, dass bei der Übermittlung der Nachrichten N1, N5 eine Kollision stattgefunden hat. Entsprechend wird im Schritt 604, 606 die Ressourcenänderungsentscheidung getroffen, um nachfolgende Nachrichten N2, N6 auf einer jeweiligen von der ersten Funkressource R1 unterschiedlichen Funkressourcen R2, R3 zu versenden. Die Funkressourcen R3, R2 unterscheiden sich beispielsweise dadurch, dass eine unterschiedliche Phase gewählt wird, was dazu führt, dass der Nachrichtenversand zeitlich versetzt voneinander durchgeführt wird. Die Funkressourcen R2, R3 werden in den Schritten 604, 606 beispielsweise zufallsbasiert ausgewählt. Es ist auch denkbar, dass die Wahl der Funkressourcen R2, R3 nach einem vorab bestimmten Schema durchgeführt wird, um eine erneute Kollision zu vermeiden, bzw. ein Kollisionsrisiko zu verringern. In den Schritten 608 und 610 werden die jeweiligen Nachrichten N1, N6 erfolgreich empfangen. Der erfolgreiche Empfang wird in diesem Beispiel nicht an die Endgeräte J und A rückgemeldet, sondern nur ein nicht erfolgreicher Empfang wird mittels der Antworten A5, A6 im Sinne einer negativen Empfangsbestätigung beantwortet.

Figur 7 zeigt ein schematisches Sequenzdiagramm. Im gezeigten Beispiel empfängt lediglich das Endgerät K eine Nachricht N1 mittels der Funkressource R1 von dem Knoten J, was dieser in einem Schritt 706 ermittelt. Die Endgeräte G und B ermitteln jeweils in Schritten 702 und 704 eine Kollision der Datenübertragung der Nachricht N1 auf der Funkressource R1 mit einer Datenübertragung ausgehend von dem Knoten A. Das Endgerät J erhält entsprechende Antworten A7, A8 und A9, wobei die Antwort A7 eine positive Empfangsbestätigung ist, und wobei die Antworten A8 und A9 negative Empfangsbestätigungen sind. In einem Schritt 710 werden die empfangenen Antworten A7, A8 und A9 miteinander verknüpft, um die Ressourcenänderungsentscheidung zu ermitteln. Im Schritt 712 wird in Abhängigkeit von der Ressourcenänderungsentscheidung die Funkressource R2 ausgewählt, um die Nachricht N2 an die Endgeräte K, G, B zu übermitteln. Im jeweiligen Schritt 714, 716, 718 wird die Nachricht N2 erfolgreich empfangen, um darauf folgend entsprechend einer jeweiligen Antwort A10, A11, A12 im Sinne einer positiven Empfangsbestätigung an das Endgerät J zu übersenden.

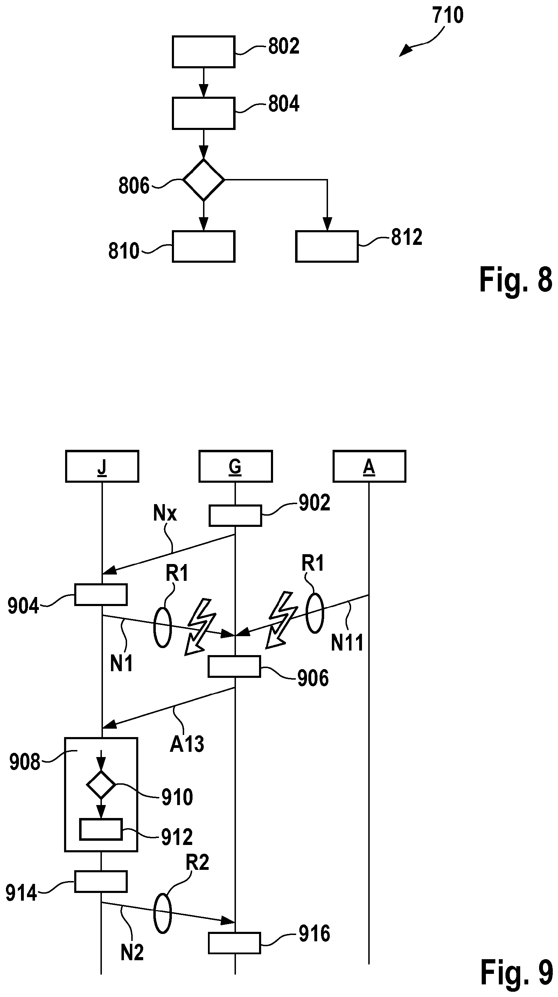

Figur 8 zeigt ein schematisches Ablaufdiagramm des Schritts 710 aus Figur 7. In einem Schritt 802 werden sowohl positive Empfangsbestätigungen als auch negative Empfangsbestätigungen als Antwort auf eine jeweils versandte Nachricht empfangen. In einem Schritt 804 wird ein Kollisionsindikator in Abhängigkeit von der Anzahl der positiven Empfangsbestätigungen und in Abhängigkeit von der Anzahl der negativen Empfangsbestätigung ermittelt. Beispielsweise kann die Anzahl der positiven Empfangsbestätigungen durch die Anzahl der negativen Empfangsbestätigungen geteilt werden. Oder es wird ein relativer Kollisionsindikator gebildet, indem die Anzahl der positiven Empfangsbestätigungen durch eine Summe der Anzahl der positiven Empfangsbestätigungen und der Anzahl der negativen Empfangsbestätigungen geteilt wird. In einem Schritt 806 wird der Kollisionsindikator mit einem Kollisionsschwellwert verglichen. Ist der Kollisionsindikator in einem Beispiel ein Verhältnis von positiven zu negativen Empfangsbestätigungen, so wird in einem Schritt 810 die Ressourcenänderungsentscheidung ermittelt, wenn das Verhältnis unter dem Kollisionsschwellwert von beispielsweise 1 liegt, was bedeutet, dass mehr als die Hälfte der adressierten Endgeräte die Nachrichten nicht erfolgreich empfängt. Liegt der Kollisionsindikator allerdings oberhalb des Kollisionsschwellwerts oder bei dem Kollisionsschwellwert, so wird in einem Schritt 812 keine Ressourcenänderungsentscheidung ermittelt, um somit die gewählte erste Funkressource R1 beizubehalten.

Figur 9 zeigt ein schematisches Sequenzdiagramm. Das Endgerät G ermittelt in einem Schritt 902 seine Bewegungs- und/oder Positionsinformation und übermittelt diese mittels einer weiteren Nachricht Nx an das Endgerät J. Das Endgerät J speichert die Bewegung- und/oder Positionsinformation des Endgerät G in einem Schritt 904. Nachrichten N1 und N11, jeweils von einem unterschiedlichen Endgerät J, A stammend aber auf der gleichen Funkressourcen R1 übermittelt, kollidieren, was das Endgerät G in einem Schritt 906 ermittelt. Die registrierte Kollision der Nachricht N1 mit der Nachrichten N11 wird in Form einer Antwort A13 als Rückmeldung auf die Nachricht N1 an das Endgerät J übermittelt.

Auf Empfang der Antwort A13 hin führt das Endgerät J einen Schritt 908 umfassend Schritte 910 und 912 durch. Im Schritt 910 wird in Abhängigkeit von Bewegungs- und/oder Positionsinformationen der Endgeräte J und G ein Abstand zwischen den Endgeräten J und G ermittelt. Alternativ oder zusätzlich wird eine gleiche oder ähnliche Bewegungsrichtung der beiden Endgeräte J und G ermittelt. Durch einen Vergleich des Abstandes mit einem Abstandsschwellwert und/oder durch die Berücksichtigung der Bewegungsrichtungen der Endgeräte J und G wird eine Gruppe von weiteren Endgeräten umfassend das Endgerät G ermittelt. Diese weiteren Endgeräte befinden sich beispielsweise innerhalb eines Radius gemäß dem Abstandsschwellwert um das Endgerät J herum und/oder weisen die gleiche oder ähnliche Bewegungsrichtung wie das Endgerät J auf.

Wird das Endgerät G im Schritt 912 zu der Gruppe, an die die Nachricht N1 bestimmt war, eingeteilt, so wird für die gesamte Gruppe von Endgeräten und damit auch für das Endgerät G im Schritt 914 die Ressourcenänderungsentscheidungen ermittelt, um die zweite Nachricht N2 über eine zweite von der ersten unterschiedliche Funkressource R2 zu übermitteln. Im Schritt 916 empfängt das Endgerät G erfolgreich die zweite Nachricht N2.

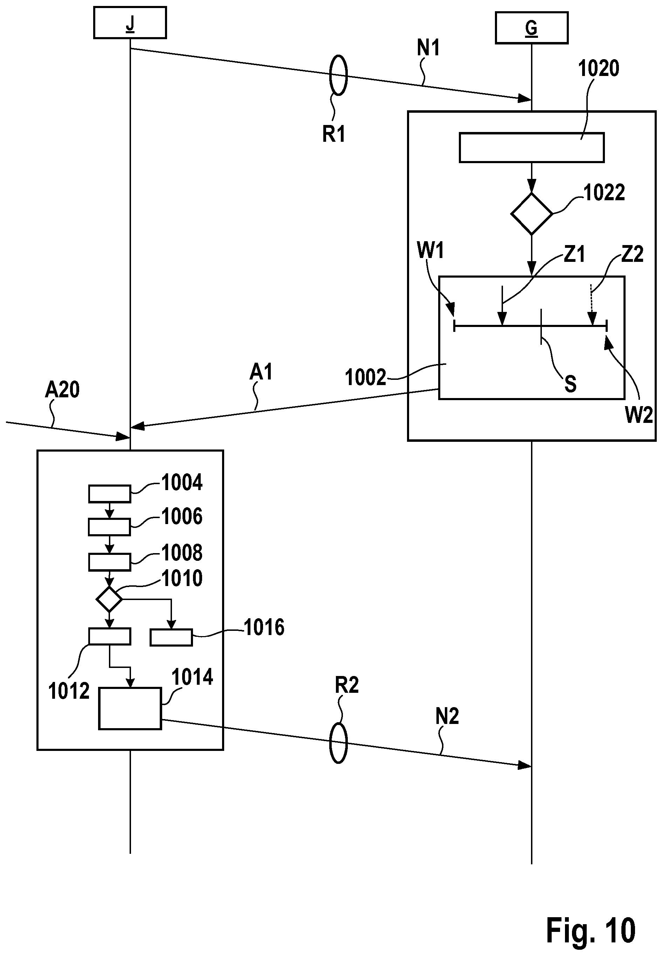

Figur 10 zeigt ein schematisches Sequenzdiagramm. Das Endgerät J sendet die Nachricht N1 auf der ersten Funkressource R1. In einem Schritt 1020 wird die Distanz und/oder Fahrtrichtung in Bezug zu dem Endgerät J ermittelt. In einem Schritt 1022 wird die Distanz und/oder Fahrtrichtung mit einem zugehörigen Schwellwert verglichen. In Abhängigkeit von dem Vergleich wird in einen Schritt 1002 gewechselt. Damit wird erreicht, dass, sollte das Endgerät J zu weit von dem Endgerät G entfernt sein oder sollte das Endgerät J eine entgegengesetzte Bewegungsrichtung zu der des Endgeräts G aufweisen, keine Antwort A1 an das Endgerät J übermittelt wird.

Die Antwort A1 wird von Endgerät G zufallsbasiert ermittelt, sodass nur eine Anzahl von die Nachricht N1 empfangenden Endgeräten G eine jeweilige Antwort A1, A20 ermittelt. In dem Schritt 1002 ermittelt das Endgerät G eine Zufallszahl Z1, Z2 zwischen zwei vorgegebenen festen Werten W1, W2. Die ermittelte Zufallszahl Z1, Z2 wird mit einem Schwellwert S verglichen. Ist die Zufallszahl Z1 kleiner als der Schwellwert S, so wird die Nachricht A1 versendet. Ist die Zufallszahl Z2 hingegen größer als oder gleich dem Schwellwert S, so unterbleibt ein Versenden der Nachricht A1. Der Schwellwert ist beispielsweise ein Kehrwert des nachfolgend beschriebenen Skalierungsfaktors, welcher beispielsweise in Abhängigkeit der Anzahl der Endgeräte einer Gruppe ermittelt wird. Selbstverständlich kann der Skalierungsfaktor auch fest eingestellt sein. Die Antworten A1, A20 können sowohl positive als auch negative Empfangsbestätigungen sein.

Handelt es sich bei den Antworten A1, A20 um eine jeweilige negative Empfangsbestätigung können die Schritte 1020 und 1022 entfallen. Im Falle einer Kollision beim Empfang der Nachricht N1 und bei ausreichendem SINR dekodiert das Endgerät G die Nachricht N1 erfolgreich. Aufgrund des Verhältnisses zur gemessenen Leistung/Energie stellt das Endgerät G eine hohe Wahrscheinlichkeit einer Nachrichtenkollision, d.h. einer zeitgleichen Übertragung von Daten auf der Funkressource R1 fest. Folglich konnte eine zweite Nachricht nicht dekodiert werden. In diesem Fall versendet das Endgerät G eine negative Empfangsbestätigung an das Endgerät, dessen Nachricht dekodiert werden konnte. Um künftigen Kollisionen vorzubeugen führt das Endegerät G die Schritte 1020 und 1022 durch, falls Störungen anderer Endgeräte auf derselben Funkressource R1 zunehmen sollten.

Das Endgerät J empfängt die Antworten A1 und A20 und ermittelt in einem Schritt 1004 eine erste Anzahl von empfangenen Antworten A1, A20 nach dem Versenden der Nachricht N1. In einem Schritt 1006 wird eine zweite Anzahl von Endgeräten der Gruppe ermittelt, wobei die Endgeräte der Gruppe die Nachricht N1 erhalten haben sollten. In einem Schritt 1008 wird eine dritte Anzahl durch Multiplikation der ersten Anzahl mit dem Skalierungsfaktor ermittelt, womit eine Anzahl von Endgeräten geschätzt wird, welche eine der der Antworten A1, A20 ähnliche Antwort versendet hätten, dies aber aufgrund des Schritts 1002 nicht durchgeführt haben.

In einem Schritt 1010 werden die dritte Anzahl und die zweite Anzahl miteinander verglichen. Ist im Falle von negativen Empfangsbestätigungen ein Quotient, der sich aus einer Division der dritte Anzahl und der zweiten Anzahl ergibt, oberhalb eines Schwellwerts, so wird in einem Schritt 1012 die Ressourcenänderungsentscheidung ermittelt, um in einem Schritt 1014 von der zuvor verwendete Funkressource R1 auf die zweite Funkressource R2 zu wechseln. Ist der vorgenannte Quotient im Falle von negativen Empfangsbestätigungen allerdings unterhalb des Schwellwerts, so wird in einem Schritt 1016 keine Ressourcenänderungsentscheidung ermittelt und das Endgerät J verwendet weiterhin die Funkressource R1.

Ist in einem weiteren Beispiel im Falle von positiven Empfangsbestätigungen der wie im vorstehenden Absatz ermittelte Quotient unterhalb eines Schwellwerts, so wird die Ressourcenänderungsentscheidung ermittelt. Sollte der Quotient oberhalb des Schwellwerts liegen, so verwendet das Endgerät J weiterhin die Funkressource R1.

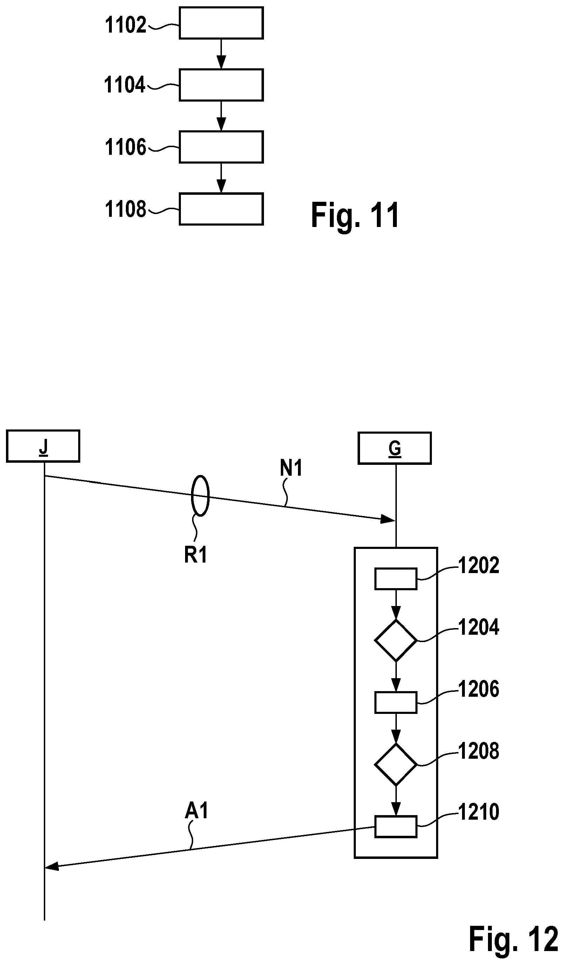

Figur 11 zeigt ein schematisches Ablaufdiagramm. In einem Schritt 1102 wird eine erste Anzahl von Antworten nach dem Versand der jeweiligen auf der ersten Funkressource gesendeten Nachricht von Endgeräten der Gruppe empfangen. In einem Schritt 1104 wird eine zweite Anzahl von Antworten nach dem Versand der jeweiligen auf der zweiten Funkressource gesendeten Nachricht von Endgeräten der Gruppe empfangen. In einem Schritt 1106 wird eine weitere Ressourcenänderungsentscheidung ermittelt, wenn eine absolute Differenz der ersten und zweiten Anzahl von Antworten einen Schwellwert überschreitet. In einem Schritt 1108 werden weitere Nachrichten in Abhängigkeit von der Ressourcenänderungsentscheidung auf einer dritten Funkressource an die Gruppe von weiteren Endgeräten gesendet, wobei sich die dritte Funkressource von der ersten und zweiten Funkressource unterscheidet. Wird also erkannt, dass die zweite Funkressource stark von Kollisionen betroffen ist, wird umgehend zu der dritten Funkressource gewechselt. Folglich führt dieser Wechsel zwischen den Funkressourcen zu einer schnellen Kollisionsreduktion. Figur 12 zeigt ein schematisches Sequenzdiagramm. In einem Schritt 1202 ermittelt das Endgerät G eine Empfangsleistung. Selbstverständlich kann alternativ zu der Empfangsleistung auch eine andere Größe wie beispielsweise die empfangene Energie, also eine über die Zeit integrierte empfangene Leistung, in dem Schritt 1204 mit einem entsprechenden Schwellwert verglichen werden. In einem Schritt 1204 wird geprüft, ob die Empfangsleistung oberhalb eines Schwellwerts liegt, d. h. ob die Empfangsleistung beim Empfang der Nachricht N1 genügend groß war. Ist dies der Fall, so versucht das Endgerät G, die Nachricht N1 in einem Schritt 1206 zu decodieren. Wird in einem Schritt 1208 festgestellt, dass die Decodierung erfolgreich war, so wird in einem Schritt 1210 die Antwort A1 auf den Empfang der Nachricht N1 hin ermittelt und versendet. Folglich wird die Antwort A1 in Abhängigkeit von der Empfangsleistung und in Abhängigkeit von der erfolgreichen oder nicht erfolgreichen Decodierung der jeweiligen ersten Nachricht N1 ermittelt.

Die Empfangsleistung auszuwerten, dient nicht nur dazu, die Reichweite der ersten Nachricht bei der Antwort zu berücksichtigen. Vielmehr ermöglicht dieser zusätzliche Parameter überhaupt erst, zwischen einer Kollision und einem, z.B. wegen natürlichem Hintergrundrauschen, zur erfolgreichen Dekodierung zu geringem SINR ("Signal to interference plus noise ratio") zu unterscheiden. Ohne die Auswertung der Empfangsleistung können zweite Endgeräte, die allein aufgrund des Hintergrundrauschens die Nachricht des ersten Endgerätes nicht erfolgreich dekodieren, entsprechende z.B. negative Antworten schicken, obwohl keine "klassische" Kollision aufgetreten ist. Je nach der Beschaffenheit des Empfängers des ersten Endgerätes bzw. den Übertragungsparametern der Nachricht kann es dann sein, dass das erste Endgeräte die negative Antwort korrekt empfängt und auf eine zweite Funkressource wechselt, wobei auch die zweite Funkressource keine Verbesserung der Übertragungsqualität bietet, da sich z.B. Hintergrundrauschen auf alle Funkressourcen gleich auswirkt. Somit würde das erste Endgerät ununterbrochen die Funkressourcen wechseln und somit die grundsätzlichen Vorteile der geringeren Kollisionswahrscheinlichkeit bei (semi-)persistentem Scheduling zunichtemachen und wäre damit kontraproduktiv.

## Patentansprüche

1. Ein erstes Endgerät (A; J) für ein Funkkommunikationsnetz (2), wobei das erste Endgerät (A; J) mindestens einen Prozessor, mindestens einen Speicher mit Computerprogrammcode und mindestens ein Kommunikationsmodul und mindestens eine Antenne umfasst, wobei der Computerprogrammcode so konfiguriert ist, dass er mit dem mindestens einen Prozessor, dem mindestens einen Kommunikationsmodul und der mindestens einen Antenne bewirkt, dass das erste Endgerät (A; J)
- erste Nachrichten auf einer ersten Funkressource über einen Sidelink-Kanal an eine Gruppe von weiteren Endgeräten sendet,
- wenigstens eine Antwort nach dem Versand der jeweiligen ersten Nachricht von wenigstens einem der weiteren Endgeräte der Gruppe über den Sidelink-Kanal empfängt,
- eine Ressourcenänderungsentscheidung in Abhängigkeit von der wenigstens einen Antwort ermittelt, und
- zweite Nachrichten in Abhängigkeit von der Ressourcenänderungsentscheidung auf einer zweiten Funkressource über den Sidelink-Kanal an die Gruppe von weiteren Endgeräten sendet, wobei die zweite Funkressource sich von der ersten Funkressource unterscheidet.

2. Das erste Endgerät (A; J) nach dem Anspruch 1, wobei das erste Endgerät (A; J)
- eine erste Anzahl von Antworten nach dem Versand der jeweiligen Nachricht über den Sidelink-Kanal empfängt,
- eine zweite Anzahl von Endgeräten der Gruppe ermittelt,
- die erste Anzahl von Antworten mit der zweiten Anzahl von Endgeräten in der Gruppe vergleicht, und
- die Ressourcenänderungsentscheidung in Abhängigkeit von dem Vergleich ermittelt.

3. Das erste Endgerät (A; J) nach dem Anspruch 1, wobei das erste Endgerät (A; J)
- eine erste Anzahl von Antworten nach dem Versand der jeweiligen Nachricht über den Sidelink-Kanal empfängt,
- eine zweite Anzahl von Endgeräten der Gruppe ermittelt,
- eine dritte Anzahl durch Multiplikation der ersten Anzahl mit einem Skalierungsfaktor ermittelt,
- die dritte Anzahl mit der zweiten Anzahl von Endgeräten der Gruppe vergleicht, und
- die Ressourcenänderungsentscheidung in Abhängigkeit von dem Vergleich ermittelt.

4. Das erste Endgerät (A; J) nach einem der vorstehenden Ansprüche, wobei die Antwort eine negative Empfangsbestätigung ist.

5. Das erste Endgerät (A; J) nach einem der vorstehenden Ansprüche, wobei die Antwort einen Ressourcenindikator, welcher die betreffende Funkressource eindeutig identifiziert, umfasst.

6. Das erste Endgerät (A; J) nach einem der vorstehenden Ansprüche, wobei das erste Endgerät (A; J)
- positive Empfangsbestätigungen als Antwort auf die jeweilige versandte Nachricht über den Sidelink-Kanal empfängt,
- negative Empfangsbestätigungen als Antwort auf die jeweilige versandte Nachricht über den Sidelink-Kanal empfängt,
- einen Kollisionsindikator in Abhängigkeit von der Anzahl der positiven Empfangsbestätigungen und in Abhängigkeit von der Anzahl der negativen Empfangsbestätigungen ermittelt, und
- die Ressourcenänderungsentscheidung in Abhängigkeit von einem Vergleich des Kollisionsindikators mit einem Kollisionsschwellwert ermittelt.

7. Das erste Endgerät (A; J) nach einem der vorstehenden Ansprüche, wobei das erste Endgerät (A; J)
- wenigstens eine Bewegungs- und/oder Positionsinformation von Endgeräten mittels einer weiteren Nachricht über den Sidelink-Kanal empfängt,
- die Gruppe der weiteren Endgeräte in Abhängigkeit von den empfangenen Bewegungs- und/oder Positionsinformation ermittelt,
- die Ressourcenänderungsentscheidung in Abhängigkeit von Antworten der Endgeräte der ermittelten Gruppe ermittelt.

8. Das erste Endgerät (A; J) nach dem Anspruch 3, wobei das erste Endgerät (A; J)
- den Skalierungsfaktor in Abhängigkeit von der zweiten Anzahl der weiteren Endgeräte der Gruppe ermittelt.

9. Das erste Endgerät (A; J) nach einem der vorstehenden Ansprüche, wobei das erste Endgerät (A; J)
- eine erste Anzahl von Antworten nach dem Versand der jeweiligen auf der ersten Funkressource gesendeten Nachricht von Endgeräten der Gruppe empfängt,
- eine zweite Anzahl von Antworten nach dem Versand der jeweiligen auf der zweiten Funkressource gesendeten Nachricht von Endgeräten der Gruppe empfängt,
- eine weitere Ressourcenänderungsentscheidung ermittelt, wenn eine absolute Differenz der ersten und zweiten Anzahl von Antworten einen Schwellwert überschreitet, und
- weitere Nachrichten in Abhängigkeit von der Ressourcenänderungsentscheidung auf einer dritten Funkressource an die Gruppe von weiteren Endgeräten sendet, wobei sich die dritte Funkressource von der ersten und zweiten Funkressource unterscheidet.

10. Das erste Endgerät (A; J) nach einem der vorstehenden Ansprüche, wobei die Nachrichten, insbesondere die ersten und zweiten Nachrichten sowie die weitere Nachricht, Cooperative Awareness Messages, CAM, insbesondere gemäß ETSI TS 102 637-2 V1.2.1, 2011-03, und/oder Decentralized Enviromental Notification Messages, DENM, insbesondere gemäß ETSI TS 102 637-3 V1.1.1,2010-09, sind.

11. Ein Verfahren zum Betreiben eines ersten Endgeräts (A; J) eines Funkkommunikationsnetzwerks (2), wobei das Verfahren umfasst:
- Versenden von ersten Nachrichten auf einer ersten Funkressource über einen Sidelink-Kanal an eine Gruppe von weiteren Endgeräten,
- Empfangen wenigstens einer Antwort über den Sidelink-Kanal nach dem Versand der jeweiligen ersten Nachricht von wenigstens einem der weiteren Endgeräte der Gruppe,
- Ermitteln einer Ressourcenänderungsentscheidung in Abhängigkeit von der wenigstens einen Antwort, und
- Versenden zweiter Nachrichten in Abhängigkeit von der Ressourcenänderungsentscheidung auf einer zweiten Funkressource über den Sidelink-Kanal an die Gruppe von weiteren Endgeräten, wobei die zweite Funkressource sich von der ersten Funkressource unterscheidet.

12. Ein zweites Endgerät (B-H; K) für ein Funkkommunikationsnetz (2),
wobei das zweite Endgerät (B-H; K) mindestens einen Prozessor, mindestens einen Speicher mit Computerprogrammcode und mindestens ein Kommunikationsmodul und mindestens eine Antenne umfasst, wobei der Computerprogrammcode so konfiguriert ist, dass er mit dem mindestens einen Prozessor, dem mindestens einen Kommunikationsmodul und der mindestens einen Antenne bewirkt, dass das zweite Endgerät (B-H; K)
- erste Nachrichten von einem ersten Endgerät auf einer ersten Funkressource über einen Sidelink-Kanal empfängt,
- eine Antwort in Abhängigkeit von einer erfolgreichen oder nicht erfolgreichen Decodierung der jeweiligen ersten Nachricht ermittelt,
- die Antwort an das erste Endgerät über den Sidelink-Kanal versendet, und
- zweite Nachrichten von dem ersten Endgerät auf einer zweiten Funkressource empfängt, wobei die zweite Funkressource sich von der ersten Funkressource unterscheidet.

13. Das zweite Endgerät (B-H; K) nach dem Anspruch 12, wobei das zweite Endgerät (B-H; K)
- eine Zufallszahl zwischen zwei Werten ermittelt,
- die Zufallszahl mit einem Schwellwert vergleicht, und
- die Antwort in Abhängigkeit von dem Vergleich an das erste Endgerät versendet.

14. Das zweite Endgerät (B-H; K) nach dem Anspruch 13, wobei das zweite Endgerät (B-H; K)
- die Antwort nur dann an das erste Endgerät über den Sidelink-Kanal versendet, wenn die ermittelte Zufallszahl kleiner oder gleich dem Schwellwert ist, wobei der Schwellwert ein Kehrwert eines Skalierungsfaktors ist.

15. Das zweite Endgerät (B-H; K) nach dem Anspruch 14, wobei das zweite Endgerät (B-H; K)
- wenigstens eine Bewegungs- und/oder Positionsinformation von weiteren Endgeräten mittels einer weiteren Nachricht empfängt, und
- den Skalierungsfaktor in Abhängigkeit von der Anzahl der weiteren Endgeräte ermittelt.

16. Das zweite Endgerät (B-H; K) nach einem der Ansprüche 12 bis 15, wobei das zweite Endgerät (B-H; K)
- eine Empfangsleistung während des Empfangs der ersten Nachricht über den Sidelink-Kanal ermittelt, und
- die Antwort in Abhängigkeit von der Empfangsleistung und in Abhängigkeit von der erfolgreichen oder nicht erfolgreichen Decodierung der jeweiligen ersten Nachricht ermittelt.

17. Das zweite Endgerät (B-H; K) nach einem der Ansprüche 12 bis 16, wobei die Antwort eine negative Empfangsbestätigung ist.

18. Das zweite Endgerät (B-H; K) nach einem der Ansprüche 12 bis 17, wobei die Antwort einen Ressourcenindikator, welcher die betreffende Funkressource des Sidelink-Kanals eindeutig identifiziert, umfasst.

19. Das zweite Endgerät (B-H; K) nach einem der Ansprüche 12 bis 18, wobei die Nachrichten, insbesondere die ersten, zweiten Nachrichten sowie die weitere Nachricht, Cooperative Awareness Messages, CAM, insbesondere gemäß ETSI TS 102 637-2 V1.2.1, 2011-03, und/oder Decentralized Enviromental Notification Messages, DENM, insbesondere gemäß ETSI TS 102 637-3 V1.1.1, 2010-09 sind.

20. Ein Verfahren zum Betreiben eines zweiten Endgeräts (B-H; K) eines Funkkommunikationsnetzwerks (2), wobei das Verfahren umfasst:
- Empfangen erster Nachrichten von einem ersten Endgerät auf einer ersten Funkressource über einen Sidelink-Kanal,
- Ermitteln einer Antwort in Abhängigkeit von einer erfolgreichen oder nicht erfolgreichen Decodierung der jeweiligen ersten Nachricht,
- Versenden der Antwort über den Sidelink-Kanal an das erste Endgerät, und
- Empfangen zweiter Nachrichten von dem ersten Endgerät auf einer zweiten Funkressource über den Sidelink-Kanal, wobei die zweite Funkressource sich von der ersten Funkressource unterscheidet.

## Claims

1. First terminal (A; J) for a radio communications network (2), the first terminal (A; J) comprising at least one processor, at least one memory containing computer program code, and at least one communication module and at least one antenna, the computer program code being configured such that it uses the at least one processor, the at least one communication module and the at least one antenna to cause the first terminal (A; J)
- to send first messages to a group of further terminals on a first radio resource via a sidelink channel,
- to receive at least one response from at least one of the further terminals in the group via the sidelink channel after the respective first message has been sent,
- to determine a resource change decision on the basis of the at least one response, and
- to send second messages to the group of further terminals on a second radio resource via the sidelink channel on the basis of the resource change decision, the second radio resource being different from the first radio resource.

2. First terminal (A; J) according to Claim 1, the first terminal (A; J)
- receiving a first number of responses via the sidelink channel after the respective message has been sent,
- determining a second number of terminals in the group,
- comparing the first number of responses with the second number of terminals in the group, and
- determining the resource change decision on the basis of the comparison.

3. First terminal (A; J) according to Claim 1, the first terminal (A; J)
- receiving a first number of responses via the sidelink channel after the respective message has been sent,
- determining a second number of terminals in the group,
- determining a third number by multiplying the first number by a scaling factor,
- comparing the third number with the second number of terminals in the group, and
- determining the resource change decision on the basis of the comparison.

4. First terminal (A; J) according to one of the preceding claims, the response being a negative acknowledgement of receipt.

5. First terminal (A; J) according to one of the preceding claims, the response comprising a resource indicator that uniquely identifies the relevant radio resource.

6. First terminal (A; J) according to one of the preceding claims, the first terminal (A; J)
- receiving positive acknowledgements of receipt in response to the respective sent message via the sidelink channel,
- receiving negative acknowledgements of receipt in response to the respective sent message via the sidelink channel,
- determining a collision indicator on the basis of the number of positive acknowledgements of receipt and on the basis of the number of negative acknowledgements of receipt, and
- determining the resource change decision on the basis of a comparison of the collision indicator with a collision threshold value.

7. First terminal (A; J) according to one of the preceding claims, the first terminal (A; J)
- receiving at least one movement and/or position information item from terminals by means of a further message via the sidelink channel,
- determining the group of further terminals on the basis of the received movement and/or position information,
- determining the resource change decision on the basis of responses from the terminals in the determined group.

8. First terminal (A; J) according to Claim 3, the first terminal (A; J)
- determining the scaling factor on the basis of the second number of further terminals in the group.

9. First terminal (A; J) according to one of the preceding claims, the first terminal (A; J)
- receiving a first number of responses from terminals in the group after the respective message sent on the first radio resource has been sent,
- receiving a second number of responses from terminals in the group after the respective message sent on the second radio resource has been sent,
- determining a further resource change decision when an absolute difference between the first and second numbers of responses exceeds a threshold value, and
- sending further messages to the group of further terminals on a third radio resource on the basis of the resource change decision, the third radio resource being different from the first and second radio resources.

10. First terminal (A; J) according to one of the preceding claims, the messages, in particular the first and second messages and also the further message, being Cooperative Awareness Messages, CAM, in particular according to ETSI TS 102 637-2 V1.2.1, 2011-03, and/or Decentralized Environmental Notification Messages, DENM, in particular according to ETSI TS 102 637-3 V1.1.1, 2010-09.

11. Method for operating a first terminal (A; J) of a radio communications network (2), the method comprising:
- sending first messages to a group of further terminals on a first radio resource via a sidelink channel,
- receiving at least one response from at least one of the further terminals in the group via the sidelink channel after the respective first message has been sent,
- determining a resource change decision on the basis of the at least one response, and
- sending second messages to the group of further terminals on a second radio resource via the sidelink channel on the basis of the resource change decision, the second radio resource being different from the first radio resource.

12. Second terminal (B-H; K) for a radio communications network (2), the second terminal (B-H; K) comprising at least one processor, at least one memory containing computer program code, and at least one communication module and at least one antenna, the computer program code being configured such that it uses the at least one processor, the at least one communication module and the at least one antenna to cause the second terminal (B-H; K)
- to receive first messages from a first terminal on a first radio resource via a sidelink channel,
- to determine a response on the basis of a successful or unsuccessful decoding of the respective first message,
- to send the response to the first terminal via the sidelink channel, and
- to receive second messages from the first terminal on a second radio resource, the second radio resource being different from the first radio resource.

13. Second terminal (B-H; K) according to Claim 12, the second terminal (B-H; K)
- determining a random number between two values,
- comparing the random number with a threshold value, and
- sending the response to the first terminal on the basis of the comparison.

14. Second terminal (B-H; K) according to Claim 13, the second terminal (B-H; K)
- sending the response to the first terminal via the sidelink channel only if the determined random number is less than or equal to the threshold value, the threshold value being a reciprocal value of a scaling factor.

15. Second terminal (B-H; K) according to Claim 14, the second terminal (B-H; K)
- receiving at least one movement and/or position information item from further terminals by means of a further message, and
- determining the scaling factor on the basis of the number of further terminals.

16. Second terminal (B-H; K) according to one of Claims 12 to 15, the second terminal (B-H; K)
- determining a reception power during reception of the first message via the sidelink channel, and
- determining the response on the basis of the reception power and on the basis of the successful or unsuccessful decoding of the respective first message.

17. Second terminal (B-H; K) according to one of Claims 12 to 16, the response being a negative acknowledgement of receipt.

18. Second terminal (B-H; K) according to one of Claims 12 to 17, the response comprising a resource indicator that uniquely identifies the relevant radio resource of the sidelink channel.

19. Second terminal (B-H; K) according to one of Claims 12 to 18, the messages, in particular the first and second messages and also the further message, being Cooperative Awareness Messages, CAM, in particular according to ETSI TS 102 637-2 V1.2.1, 2011-03, and/or Decentralized Environmental Notification Messages, DENM, in particular according to ETSI TS 102 637-3 V1.1.1, 2010-09.

20. Method for operating a second terminal (B-H; K) of a radio communications network (2), the method comprising:
- receiving first messages from a first terminal on a first radio resource via a sidelink channel,
- determining a response on the basis of a successful or unsuccessful decoding of the respective first message,
- sending the response to the first terminal via the sidelink channel, and
- receiving second messages from the first terminal on a second radio resource via the sidelink channel, the second radio resource being different from the first radio resource.

## Revendications

1. Premier terminal (A ; J) destiné à un réseau de radiocommunication (2), le premier terminal (A ; J) comprenant au moins un processeur, au moins une mémoire comprenant un code de programme informatique, et au moins un module de communication et au moins une antenne, le code de programme informatique étant configuré pour interagir avec l'au moins un processeur, l'au moins un module de communication et l'au moins une antenne, de sorte que le premier terminal (A ; J)
- transmet des premiers messages sur une première ressource radio à un groupe d'autres terminaux par l'intermédiaire d'un canal de liaison latérale,
- reçoit par l'intermédiaire du canal de liaison latérale au moins une réponse, après avoir envoyé le premier message respectif, en provenance d'au moins un des autres terminaux du groupe,
- détermine une décision de changement de ressource en fonction de l'au moins une réponse, et
- transmet des deuxièmes messages sur une deuxième ressource radio par l'intermédiaire du canal de liaison latérale au groupe d'autres terminaux en fonction de la décision de changement de ressource, la deuxième ressource radio étant différente de la première ressource radio.

2. Premier terminal (A ; J) selon la revendication 1, dans lequel le premier terminal (A ; J)
- reçoit par l'intermédiaire du canal de liaison latérale un premier nombre de réponses après avoir envoyé le message respectif,
- détermine un deuxième nombre de terminaux du groupe,
- compare le premier nombre de réponses au deuxième nombre de terminaux du groupe, et
- détermine la décision de changement de ressource en fonction de la comparaison.

3. Premier terminal (A ; J) selon la revendication 1, dans lequel le premier terminal (A ; J)
- reçoit par l'intermédiaire du canal de liaison latérale un premier nombre de réponses après avoir envoyé le message respectif,
- détermine un deuxième nombre de terminaux du groupe,
- détermine un troisième nombre en multipliant le premier nombre par un facteur d'échelle,
- compare le troisième nombre au deuxième nombre de terminaux du groupe, et
- détermine la décision de changement de ressource en fonction de la comparaison.

4. Premier terminal (A ; J) selon l'une des revendications précédentes, dans lequel la réponse est un accusé de réception négatif.

5. Premier terminal (A ; J) selon l'une des revendications précédentes, dans lequel la réponse comprend un indicateur de ressource qui identifie de manière unique la ressource radio concernée.

6. Premier terminal (A ; J) selon l'une des revendications précédentes, dans lequel le premier terminal (A ; J)
- reçoit par l'intermédiaire du canal de liaison latérale des accusés de réception positifs en réponse au message transmis respectif,
- reçoit par l'intermédiaire du canal de liaison latérale des accusés de réception négatifs en réponse au message transmis,
- détermine un indicateur de collision en fonction du nombre des accusés de réception positifs et en fonction du nombre des accusés de réception négatifs, et
- détermine la décision de changement de ressource en fonction d'une comparaison de l'indicateur de collision avec une valeur de seuil de collision.

7. Premier terminal (A ; J) selon l'une des revendications précédentes, dans lequel le premier terminal (A ; J)
- reçoit par l'intermédiaire du canal de liaison latérale au moins une information de mouvement et/ou de position en provenance des terminaux au moyen d'un autre message,
- détermine le groupe des autres terminaux en fonction de l'information de mouvement et/ou de position reçue,
- détermine la décision de changement de ressource en fonction des réponses des terminaux du groupe déterminé.

8. Premier terminal (A ; J) selon la revendication 3, dans lequel le premier terminal (A ; J)
- détermine le facteur d'échelle en fonction du deuxième nombre des autres terminaux du groupe.

9. Premier terminal (A ; J) selon l'une des revendications précédentes, dans lequel le premier terminal (A ; J)
- reçoit un premier nombre de réponses en provenance de terminaux du groupe après avoir envoyé le message respectif transmis sur la première ressource radio,
- reçoit un deuxième nombre de réponses en provenance de terminaux du groupe après avoir envoyé le message respectif transmis sur la deuxième ressource radio,
- détermine une autre décision de changement de ressource lorsqu'une différence absolue entre les premier et deuxième nombres de réponses dépasse une valeur de seuil, et
- transmet d'autres messages sur une troisième ressource radio au groupe d'autres terminaux en fonction de la décision de changement de ressource, la troisième ressource radio étant différente des première et deuxième ressources radio.

10. Premier terminal (A ; J) selon l'une des revendications précédentes, dans lequel les messages, en particulier les premier et deuxième messages, ainsi que l'autre message, sont des messages de type Cooperative Awareness Messages, CAM, en particulier selon ETSI TS 102 637-2 V1.2.1, 2011-03, et/ou des messages de type Decentralized Enviromental Notification Messages, DENM, en particulier selon ETSI TS 102 637-3 V1.1.1,2010-09.

11. Procédé de fonctionnement d'un premier terminal (A ; J) d'un réseau de radiocommunication (2), le procédé comprenant :
- la transmission de premiers messages sur une première ressource radio à un groupe d'autres terminaux par l'intermédiaire d'un canal de liaison latérale,
- la réception d'au moins une réponse, après avoir envoyé le premier message respectif, en provenance d'au moins un des autres terminaux du groupe par l'intermédiaire du canal de liaison latérale,
- la détermination d'une décision de changement de ressource en fonction de l'au moins une réponse, et
- la transmission de deuxièmes messages sur une deuxième ressource radio par l'intermédiaire du canal de liaison latérale au groupe d'autres terminaux en fonction de la décision de changement de ressource, la deuxième ressource radio étant différente de la première ressource radio.

12. Deuxième terminal (B-H ; K) destiné à un réseau de radiocommunication (2), le deuxième terminal (B-H ; K) comprenant au moins un processeur, au moins une mémoire comprenant un code de programme informatique, et au moins un module de communication et au moins une antenne, le code de programme informatique étant configuré pour interagir avec l'au moins un processeur, l'au moins un module de communication et l'au moins une antenne, de sorte que le deuxième terminal (B-H ; K)
- reçoit par l'intermédiaire d'un canal de liaison latérale des messages sur une première ressource radio en provenance d'un premier terminal,
- détermine une réponse en fonction d'un décodage réussi ou non du premier message respectif,
- transmet par l'intermédiaire du canal de liaison latérale la réponse au premier terminal, et
- reçoit des deuxièmes messages sur une deuxième ressource radio en provenance du premier terminal, la deuxième ressource radio étant différente de la première ressource radio.

13. Deuxième terminal (B-H ; K) selon la revendication 12, dans lequel le deuxième terminal (B-H ; K)
- détermine un nombre aléatoire entre deux valeurs,
- compare le nombre aléatoire à une valeur de seuil, et
- transmet la réponse au premier terminal en fonction de la comparaison.

14. Deuxième terminal (B-H ; K) selon la revendication 13, dans lequel le deuxième terminal (B-H ; K)
- transmet la réponse au premier terminal par l'intermédiaire du canal de liaison latérale uniquement lorsque le nombre aléatoire déterminé est inférieur ou égal à la valeur de seuil, la valeur de seuil étant une valeur inverse d'un facteur d'échelle.

15. Deuxième terminal (B-H ; K) selon la revendication 14, dans lequel le deuxième terminal (B-H ; K)
- reçoit au moins une information de mouvement et/ou de position en provenance d'autres terminaux au moyen d'un autre message, et
- détermine le facteur d'échelle en fonction du nombre d'autres terminaux.

16. Deuxième terminal (B-H ; K) selon l'une des revendications 12 à 15, dans lequel le deuxième terminal (B-H ; K)
- détermine une puissance de réception lors de la réception du premier message par l'intermédiaire du canal de liaison latérale, et
- détermine la réponse en fonction de la puissance reçue et en fonction du décodage réussi ou non du premier message respectif.

17. Deuxième terminal (B-H ; K) selon l'une des revendications 12 à 16, dans lequel la réponse est un accusé de réception négatif.

18. Deuxième terminal (B-H ; K) selon l'une des revendications 12 à 17, dans lequel la réponse comprend un indicateur de ressource qui identifie de manière unique la ressource radio concernée du canal de liaison latérale.

19. Deuxième terminal (B-H ; K) selon l'une des revendications 12 à 18, dans lequel les messages, en particulier les premier et deuxième messages, ainsi que l'autre message, sont des messages de type Cooperative Awareness Messages, CAM, en particulier selon ETSI TS 102 637-2 V1.2.1, 2011-03 et/ou des messages de type Enviromental Notification Messages, DENM, en particulier selon ETSI TS 102 637-3 V1.1.1, 2010-09.

20. Procédé de fonctionnement d'un deuxième terminal (B-H ; K) d'un réseau de radiocommunication (2), le procédé comprenant :
- la réception de premiers messages sur une première ressource radio en provenance d'un premier terminal par l'intermédiaire d'un canal de liaison latérale,
- la détermination d'une réponse en fonction d'un décodage réussi ou non du premier message respectif,
- la transmission de la réponse au premier terminal par l'intermédiaire du canal de liaison latérale, et
- la réception de deuxièmes messages sur une deuxième ressource radio en provenance du premier terminal par l'intermédiaire du canal de liaison latérale, la deuxième ressource radio étant différente de la première ressource radio.
